Europäisches Patentamt

European Patent Office

Office européen des brevets

(19)

(11) EP 0 818 308 A1

(12) **EUROPEAN PATENT APPLICATION**

(43) Date of publication:
14.01.1998 Bulletin 1998/03

(51) Int Cl.6: **B41C 1/055**, H04N 1/40

(21) Application number: 97304957.0

(22) Date of filing: 07.07.1997

(84) Designated Contracting States:
AT BE CH DE DK ES FI FR GB GR IE IT LI LU MC NL PT SE

(30) Priority: 09.07.1996 GB 9614369

(71) Applicant: Fujifilm Electronic Imaging Limited
London NW3 6HY (GB)

(72) Inventors:
• Manley, George Charles
St. Albans, Herts, AL2 3QX (GB)

• Cochrane, Ravinder
Chorleywood, Herts, WD3 5JU (GB)

(74) Representative: Skone James, Robert Edmund
GILL JENNINGS & EVERY
Broadgate House
7 Eldon Street
London EC2M 7LH (GB)

(54) **Method and apparatus for recording information in a record medium**

(57) Apparatus for recording information in a record medium such as a printing plate (4) in which the information is recorded in a region of the medium only when the region is subjected to an energy level above the threshold. The apparatus comprises a record medium support (1); and an array of first recording beam generators (8) for generating a corresponding array of first recording beams (10A) which impinge upon a record medium (4) on the support (1) and which are modulated in accordance with the information to be recorded, the energy level of the first recording beams (10A) never exceeding the threshold.

A second radiation beam generator (12) exposes the record medium (4) to a second radiation beam (13A), before, and/or during, and/or after exposure to the first recording beams (10A). The second radiation beam (13A) has an energy level less than the threshold but sufficiently high that the total energy in a region where information is to be recorded exceeds the threshold when that region has been exposed to both the first and second beams within the thermal time constant of the medium.

Fig.1.

EP 0 818 308 A1

## Description

The invention relates to methods and apparatus for recording information in a record medium.

Conventional imaging systems for making printing plates make use of silver lith technology which requires approximately an exposure energy level of 2 μJ cm$^{-2}$ in order to expose a pixel. Recently, new plate technology has been introduced based on a thermal imaging process which requires much higher energy levels of the order of 200 mJ cm$^{-2}$. This is a jump in energy requirements of 100,000. Furthermore, the modern market requires an increase of ten times in productivity and overall this equates to an increase of 10$^6$ in technology. Current technology cannot meet these demands. In order to meet the productivity requirements, very high modulation rates of an exposure beam would be needed but these cannot be achieved in conjunction with the high power requirements of the thermal imaging plates.

At present, thermal imaging is achieved by heating the plate in an oven or the like and then transferring the plate to an output device on which the image is then reproduced. This has a number of problems. Firstly, it is necessary to handle the hot plate during transfer from the oven to the output device and secondly throughout this process, the plate is cooling down so that areas towards the end of an imaging process will be cooler than areas at the beginning. This can lead to variability in the quality of reproduction due to variations in recorded spot size.

A further problem with the existing technology is that in order to increase imaging speeds, arrays of exposing radiation beams are used. However, the power requirement for the beams is very high even when used to expose a thermal imaging plate transferred from an oven and it is not possible to achieve rapid modulation at such high power levels.

In accordance with one aspect of the present invention, a method of recording information in a record medium in which information is recorded in a region of the medium only when the region is subjected to an energy level above a threshold comprises:

1. exposing the record medium to an array of first recording beams which are modulated in accordance with the information to be recorded, the energy level of the first recording beams never exceeding the threshold; and,
2. exposing the record medium to a second radiation beam, before, and/or during, and/or after exposure to the first recording beams, the second radiation beam having an energy level less than the threshold but sufficiently high that the total energy in a region where information is to be recorded exceeds the threshold when that region has been exposed to both the first and second beams within the thermal time constant of the medium.

In accordance with a second aspect of the present invention, apparatus for recording information in a record medium in which the information is recorded in a region of the medium only when the region is subjected to an energy level above the threshold comprises a record medium support; an array of first recording beam generators for generating a corresponding array of first recording beams which impinge upon a record medium on the support and which are modulated in accordance with the information to be recorded, the energy level of the first recording beams never exceeding the threshold; and a second radiation beam generator for exposing the record medium to a second radiation beam, before, and/or during, and/or after exposure to the first recording beams, the second radiation beam having an energy level less than the threshold but sufficiently high that the total energy in a region where information is to be recorded exceeds the threshold when that region has been exposed to both the first and second beams within the thermal time constant of the medium.

In our invention, instead of separately heating the record medium in an oven or the like and then transferring it to the output device, we carry out both the processes (heating and imaging) with the record medium in situ. This allows the first beams to have an energy level less than the second beam so that the first beams can be modulated at high modulation rates thus achieving the desired productivity rate while the second beam, which is normally unmodulated, provides the necessary additional heat to achieve recordal of the information. This is particularly useful when an array of first radiation beams are used since they can be modulated at much faster rates in view of the lower power requirements than has been possible up to now. Many first radiation beams could be used, for example, up to 64 or more, typically arranged in a linear or two dimensional array.

Typically, the second radiation beam will have a similar form to the overall dimensions of the first recording beam but other forms of second radiation beam could be used, for example having an elongate dimension as would be generated from a bar-like source.

Conveniently, the first and second beam generators are mounted on a common expose head. Alternatively, the second radiation beam generator could be mounted separately from the first recording beam generators.

The first and second beam generators can be implemented in any conventional form. Preferably, however, at least the second radiation beam generator is in the form of an array of generators such as LEDs, typically a linear array, to provide an illumination source which is broad and flat-topped in one axis while having a lambertian cross-section in the other. It would also be possible to use multi-dimensional arrays of sources.

It should be noted that the use of a multiple array of first radiation beam generators, for example LEDs or laser diodes, is not to boost the power level but to increase productivity. In this case, the second beam(s) would need to be present over the full extent of the first beams within the period of the thermal time constant of the medium. This should be contrasted with earlier uses of double exposures to laser beams as, for example, described in EP-A-0485148. This is concerned with reciprocity failure and is attempting to reduce the exposure times required. It is not concerned with increasing modulation rates.

It will be understood that the invention is applicable to any form of conventional expose scanning device such as an external drum scanner, an internal drum scanner, or a flat bed scanner.

An example of a method and apparatus according to the invention will now be described with reference to the accompanying drawings, in which:-

Figure 1 is a schematic block diagram of the apparatus;
Figure 2 is a schematic block diagram of the expose head as seen in the direction A in Figure 1;
Figure 3 is a plot comparing illumination requirements; and,
Figure 4 is a plot similar to Figure 3 but of a particular example.

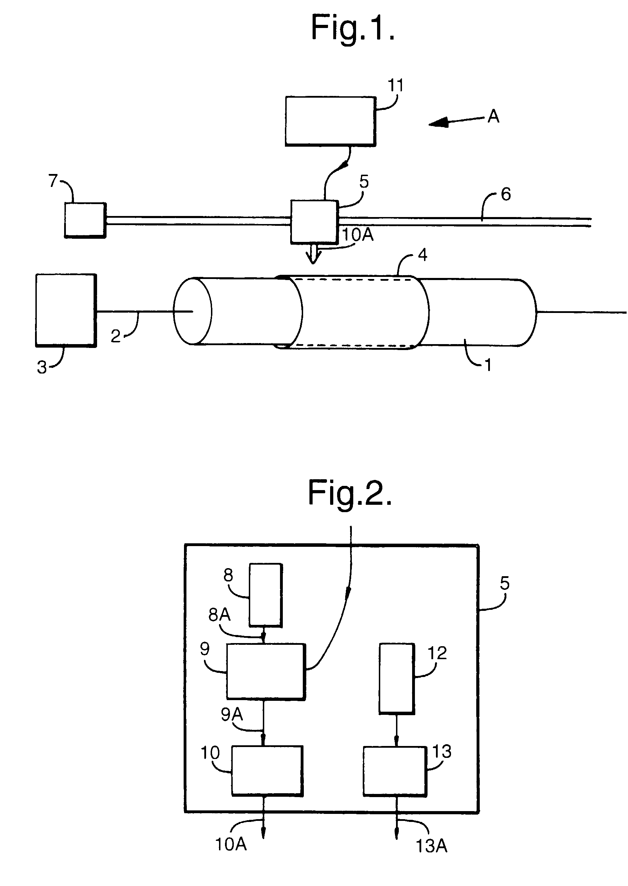

The apparatus shown in Figure 1 comprises a drum 1 mounted to an axle 2 which is connected to a motor 3. A thermal imaging plate 4 on which an image is to be recorded is mounted on the drum 1. A typical example of such a thermal imaging plate is a Dupont thermal imaging plate.

Mounted for movement alongside the drum 1 is an expose head 5 supported on a lead screw 6 which is connected to a motor 7.

In use, the motor 3 rotates the axle 2 and hence the drum 1 at a relatively fast speed while the motor 7 rotates the lead screw 6 at a slower speed so that the expose head 5 scans across the entire surface of the thermal imaging plate 4.

The main components of the expose head 5 are shown in Figure 2. The expose head 5 includes a linear (one-dimensional) array of first, low power lasers 8 each of which generates a laser beam 8A which is fed to a respective acousto-optic modulator 9, the modulated beams 9A being fed to expose optics 10, the resultant modulated beams 6A then exiting the expose head 5 and impinging on the plate 4. The acousto-optic modulators 9 are controlled from a controller 11 in a conventional manner so that the beams are modulated (typically ON/OFF) in accordance with predetermined image information defining the digital colour component content of pixels of the image. Thus, typically, in the case of a half-tone representation, four colour separation plates will be generated by this process.

Typically, there will be a multiplicity of lasers 8, for example up to 64. These will normally be arranged in a rectilinear fashion parallel with the axis of the drum 1 but other types of array are also possible including two dimensional arrays.

Alternative configurations are possible as will be readily apparent to a person skilled in the art. Thus, any suitable modulating source that uses direct or indirect modulation could be used in place of the lasers 8 and the modulators 9. For example, the modulation could be achieved by the switching of a diode laser, by the use of an electro-optic modulator or by amplitude modulation using a spatial light modulator.

As explained above, the power level of each laser 8 is typically relatively low, of the order of a few watts and is insufficient to record information in the plate 4 since the power level does not exceed the imaging threshold of the plate: 100 mJ/cm$^2$. In order therefore to achieve recordal, the expose head 5 includes a second, higher power laser 12 of the order of a few tens of watts which generates an unmodulated laser beam which is fed to optics 13, the resultant high power beam being directed to impinge upon the plate 4 just behind the point of impingement of the beams from the lasers 8. The plate has sufficient thermal memory to retain the heat generated upon exposure to the beams from the lasers 8 until it is exposed to the beam from the source 12.

The beam 13A generated by the source 12 and optics 13 can take a variety of forms, provided the required power density is present, but will typically have a Guassian energy distribution as will the beams from the lasers 8. In the preferred example, each beam has a diameter of about 10 microns. The beams may be arranged to impinge on identical regions of the medium record substantially simultaneously providing the two beams are mutually incoherent. They can be of different wavelengths depending on the sensitivity of the plate material. Alternatively, they can impinge on adjacent regions, sufficient heat being transferred laterally to achieve exposure where appropriate.

It will be understood that many variations of this technique are possible. For example, the beam from the source 12 could be arranged to impinge on the record medium 4 before the beams from the lasers 8. In addition, there could be more than one source for generating the higher energy level and these could be arranged upstream and downstream respectively of the beams from the lasers 8.

In a further example, the higher power radiation could be generated from a source separate from the expose head 5. For example, a bar-like heater could be positioned alongside the drum 1 adjacent the position at which the beams from the lasers 8 impinge on the plate 4.

The apparatus described could also be used for imaging a conventional silver lith plate simply by switching off the laser 12.

The theoretical background to the invention will now be described by considering the use of two separate illumination sources for the exposure of plate materials which require high power levels. The concept is to pre-expose and then superimpose a modulated signal on top of that pre-exposure. In this way, it is possible to use a relatively low power source to provide the exposure modulation.

Two means of providing pre-exposure are considered the first using a laser source of the required power and the second using some form of uniform illumination.

Use of Gaussian Pre-Exposure Illumination

The irradiance distribution of a gaussian beam is given by:

$$I(r) = \frac{2 \cdot P}{\pi\, w^2} e^x$$

where

P is the total power in the beam
w is the beam radius at which I(r) has fallen to $1/e^2$ of the maximum value
r is the position along the beam
$x = 2r^2/w^2$

For the case being considered, two gaussian beams are combined to give the required exposure. One beam is on constantly and brings the power at the plate material to just below the exposure threshold. The second beam is modulated to provide the additional power required to properly expose the plate. Provided the two beams are completely incoherent, their combined effect will be given by the algebraic sum of the separate constituent waves in intensity space. The resultant intensity at the plate will, therefore, be the sum of the component intensities. The $1/e^2$ beam diameter of the resultant beam will be the same $1/e^2$ beam diameter as that of the constituent beams provided they are identical when specified.

The two beams can, therefore, be optically manipulated to give the required $1/e^2$ beam diameter. This will be true for any chosen "beam diameter".

Consider now a specific example:

A laser beam of power 100mW (=P1) will give the required exposure on the expose medium for a 20 micron spot. If the exposure threshold of the medium lies at, say, a power equivalent to the 1/e power level of this beam then to "pre-expose" the medium, a beam of intensity 100mW∗1/e (=P2) is required. To then expose the medium, a modulated beam of intensity P1-P2 (=P3) will be required to provide sufficient energy for correct operation.

P1 = 0.1·watt
w = $10^{-5}$·m
i = 0..400
$r_i$ = (0.020-0.0001·i)·mm

$$Int(P,r) = \frac{2 \cdot P}{\pi \cdot w^2} e^y$$

where $y = -2r_i^2/w^2$

$$P2 = P1 \cdot \frac{1}{e}$$

P2 = 0.037·watt
P3 = P1 - P2
P3 = 0.063·watt

The power in the beam at the various power levels can be calculated using:

$$R = \frac{w}{\sqrt{2}}$$

(in this case the diameter corresponding to the 1/e power level)

$$I(P) = \int_{0 \cdot m}^{R} \int_{0}^{2\pi} \frac{2 \cdot P}{\pi \cdot w^2} \cdot e^z \cdot r d\theta dr$$

where $Z = -2r^2/w^2$
$I(P1) = 0.063 \cdot watt$
$I(P2) = 0.023 \cdot watt$
$I(P1) - I(P2) = 0.04 \cdot watt$
$I(P3) = 0.04 \cdot watt$

In this case, the modulated beam will still have to be of very high power. An alternative approach would be to uniformly illuminate the medium with a source which will give the same equivalent power level just below the exposure threshold of the material.

Uniform Illumination Pre-Exposure

Using the same values as before using uniform illumination, pre-exposure will require a power density given by:

$$Step = \frac{I(P2)}{\pi \cdot R^2}$$

$Step = 1.48 \cdot 10^8 \cdot m^{-2} \cdot watt$
The modulating beam will still have to be of power P3 to achieve correct exposure.

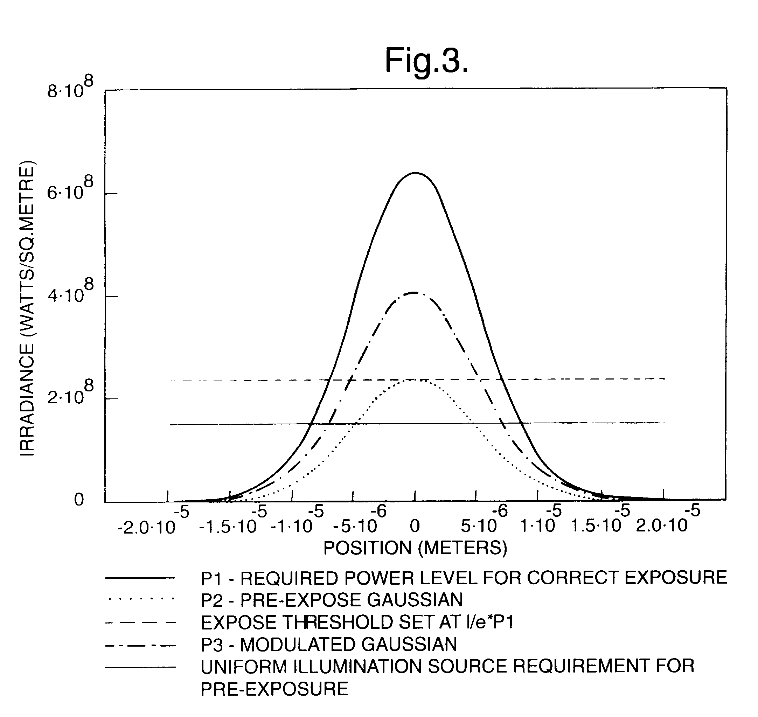

Figure 3 is a plot to compare illumination requirement.
Ideally, therefore, in order if the threshold power level is considerably less than the power required to achieve proper exposure of the medium, the modulating beam will also have to be of high power so this scheme may not be of great benefit. However, if P1 and P2 are close then the modulating mean can be of low power, just enough for efficient imaging.

Example

In the general case, if the exposure threshold of the medium is given by, for example:

$$Threshold = \frac{5 \cdot 10^4 \cdot joule}{(10^{-2} \cdot m)^2}$$

$Threshold = 5 \cdot 10^8 \cdot m^{-2} \cdot sec \cdot watt$
Then in 1 sec the irradiance must be:

$$Irr = \frac{Threshold}{sec}$$

$Irr = 5 \cdot 10^8 \cdot m^{-2} \cdot watt$

$$\int_{0 \cdot m}^{R} \int_{0}^{2 \cdot \pi} Irr \cdot r \, dO \, dr = 0.079 \cdot watt$$

is the required power to achieve threshold.

The pre-exposure can then be supplied by either a gaussian laser beam of power 0.079 watt or a uniform illumination level of:

$$Step\ C = \frac{\int_{0 \cdot m}^{\sqrt{-\ln\frac{(\frac{0.079 \cdot watt}{P1})}{2}} \cdot w} \int_{0}^{2 \cdot \pi} \frac{2 \cdot X\ 0.079 \cdot watt}{\pi w^2} \cdot e^z \cdot rd\theta dr}{\frac{-\ln(\frac{0.079 \cdot watt}{P1})}{2} \pi(w^2)}$$

Step C = $4.48 \cdot 10^8 \cdot m^{-2} \cdot watt$

The modulating beam used with either configuration would have to be of power:

$$P1 = 0.079 \cdot watt = 0.021 \cdot watt$$

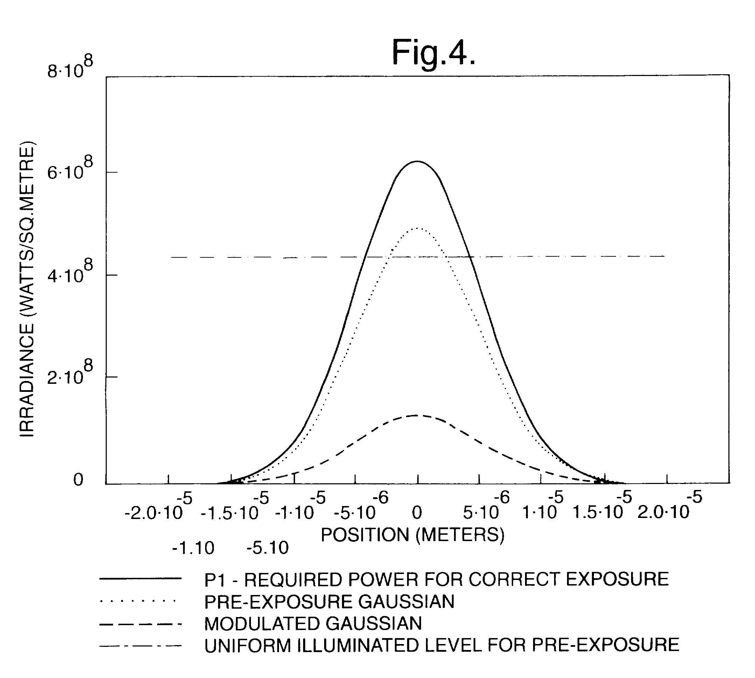

Figure 4 illustrates the illumination requirements for the Example.

## Claims

1. A method of recording information in a record medium (4) in which information is recorded in a region of the medium only when the region is subjected to an energy level above a threshold, the method comprising:

   1. exposing the record medium (4) to an array of first recording beams (10A) which are modulated in accordance with the information to be recorded, the energy level of the first recording beams never exceeding the threshold; and,
   2. exposing the record medium (4) to a second radiation beam (13A), before, and/or during, and/or after exposure to the first recording beams (10A), the second radiation beam (13A) having an energy level less than the threshold but sufficiently high that the total energy in a region where information is to be recorded exceeds the threshold when that region has been exposed to both the first and second beams within the thermal time constant of the medium.

2. A method according to claim 1, wherein the energy of each first recording beam (10A) is less than the energy of the second beam (13A).

3. A method according to claim 1 or claim 2, wherein the second beam is unmodulated.

4. A method according to any of the preceding claims, wherein the diameters of the first and second beams (10A, 13A) are substantially the same.

5. A method according to any of the preceding claims, wherein the record medium (4) comprises a printing plate.

6. Apparatus for recording information in a record medium in which the information is recorded in a region of the medium only when the region is subjected to an energy level above the threshold, the apparatus comprising a record medium support (1); an array of first recording beam generators (8) for generating a corresponding array of first recording beams (10A) which impinge upon a record medium (4) on the support (1) and which are modulated in accordance with the information to be recorded, the energy level of the first recording beams (10A) never exceeding the threshold; and a second radiation beam generator (12) for exposing the record medium (4) to a second radiation beam (13A), before, and/or during, and/or after exposure to the first recording beams, the second radiation beam having an energy level less than the threshold but sufficiently high that the total energy in a region where information is to be recorded exceeds the threshold when that region has been exposed to both the first and second beams within the thermal time constant of the medium.

7. Apparatus according to claim 6, wherein the first and/or second beam generators (8,12) comprise a laser.

8. Apparatus according to claim 6 or claim 7, wherein the first and second beam generators (8,12) are mounted on a common expose head (5).

9. Apparatus according to any of claims 6 to 8, wherein the first beam generators (8) generate a linear array of first radiation beams (10A).

10. Apparatus according to any of claims 6 to 9, wherein the record medium support (1) is adapted to support a printing plate (4).

# Fig.1.

# Fig.2.

# Fig.3.

Legend:

P1 - REQUIRED POWER LEVEL FOR CORRECT EXPOSURE

P2 - PRE-EXPOSE GAUSSIAN

EXPOSE THRESHOLD SET AT l/e*P1

P3 - MODULATED GAUSSIAN

UNIFORM ILLUMINATION SOURCE REQUIREMENT FOR PRE-EXPOSURE

EP 0 818 308 A1

# Fig.4.

IRRADIANCE (WATTS/SQ.METRE)

POSITION (METERS)

——— P1 - REQUIRED POWER FOR CORRECT EXPOSURE

· · · · · · · · PRE-EXPOSURE GAUSSIAN

– – – – – MODULATED GAUSSIAN

—·—·—·— UNIFORM ILLUMINATED LEVEL FOR PRE-EXPOSURE

EP 0 818 308 A1

**European Patent Office**

**EUROPEAN SEARCH REPORT**

Application Number

EP 97 30 4957

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | EP 0 485 148 A (CANON K. K.)<br>* the whole document *<br>--- | 1-10 | B41C1/055<br>H04N1/40 |
| A | EP 0 708 550 A (MINNESOTA MINING AND MANUFACTURING COMPANY)<br>* page 2, line 30 - line 50 *<br>--- | 1,5,6,9,10 | |
| A | US 3 725 574 A (U. GAST)<br>* column 3, line 28 - column 4, line 65 *<br>* column 8, line 50 - line 59 *<br>--- | 9 | |
| A | US 4 275 092 A (HIROYUKI NAKAYAMA ET AL.)<br>--- | | |
| A | PATENT ABSTRACTS OF JAPAN<br>vol. 5, no. 147 (M-088), 17 September 1981<br>& JP 56 077193 A (RICOH CO LTD), 25 June 1981,<br>* abstract *<br>--- | | |
| A | WO 91 08904 A (EASTMAN KODAK COMPANY)<br>--- | | **TECHNICAL FIELDS SEARCHED** (Int.Cl.6) |
| A | US 5 138 339 A (DOUGLAS N. CURRY ET AL.)<br>----- | | B41C<br>B41M<br>H04N |

The present search report has been drawn up for all claims

| Place of search | Date of completion of the search | Examiner |
|---|---|---|
| THE HAGUE | 3 October 1997 | De Roeck, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)